# DEMANDE DE BREVET EUROPEEN

(11) **EP 4 155 043 A1**
(43) Date de publication de la demande: **29.03.2023**
(21) Numéro de dépôt: 22195031.4
(22) Date de dépôt: 12.09.2022
(51) Int. Cl.: B29C 33/08, B29C 33/38

(54) **MOULE, NOTAMMENT POUR LA REALISATION DE PIECE COMPOSITE, ET PROCEDE DE FABRICATION D'UN TEL MOULE**

(30) Priorité: 22.09.2021 FR 2109980
(71) Demandeur: AFC Stab, 44680 St Hilaire de Chaléons (FR)
(72) Inventeur: MERLE, Henrick, 44680 Saint Hilaire de Chaléons (FR)
(74) Mandataire: Ipsilon

(57) **Abrégé**

L'invention concerne un moule (1) notamment pour la réalisation de pièce composite, ledit moule (1) comprenant une âme (2) et une peau (3) en un premier matériau composite (M1), ladite peau (3), disposée à recouvrement au moins partiel de l'âme (2), présentant une première face (4) tournée vers l'âme (2) et une seconde face opposée destinée à venir en contact avec la pièce à fabriquer et formant une surface active de moulage (5).

Le moule (1) comprend une semelle (6) en un deuxième matériau composite (M2), ladite semelle (6) étant une semelle préfabriquée collée à l'âme (2), l'âme (2) interposée entre la semelle (6) et la peau (3) est une masse solide comprenant un ou plusieurs blocs de silicate de calcium assemblés entre eux, et au moins une partie de la surface active de moulage (5) présente une forme homothétique de la forme d'au moins une partie de la surface de l'âme (2) tournée vers la peau (3) et recouverte par la peau (3).

## Description

La présente invention concerne un moule, notamment pour la réalisation de pièce composite thermodurcissable ou thermoplastique, ainsi qu'un procédé de fabrication d'un tel moule.

Elle concerne en particulier un moule comprenant une âme et une peau en un premier matériau composite, ladite peau, disposée à recouvrement au moins partiel de l'âme, présentant une première face tournée vers l'âme et une seconde face opposée destinée à venir en contact avec la pièce à fabriquer et formant une surface active de moulage.

Les industriels sont à la recherche permanente de moules aptes à permettre la fabrication de pièce composite notamment de grande dimension qui présentent un faible coefficient de dilatation thermique, une capacité à résister à des températures de l'ordre de 450°C, et à des pressions jusqu'à 30 bars sans nuire à la stabilité dimensionnelle, à la légèreté et à la capacité de recyclage de tels moules.

FR-3.055.570 décrit un moule comprenant une structure de renfort en matériaux composites comportant au moins une couche de renfort et une couche de surface active constituée d'une peau métallique.

WO 2014/141276 décrit un moule multicouches en matériaux composites.

Un but de l'invention est de proposer un moule dont la conception permet un faible coefficient de dilatation thermique dudit moule, une capacité dudit moule à résister à des températures de l'ordre de 450°C, et à des pressions jusqu'à 30 bars sans nuire à la stabilité dimensionnelle, à la légèreté et à la capacité de recyclage d'un tel moule.

A cet effet, l'invention a pour objet un moule notamment pour la réalisation de pièce composite thermodurcissable ou thermoplastique, ledit moule comprenant une âme et une peau en un premier matériau composite, ladite peau, disposée à recouvrement au moins partiel de l'âme, présentant une première face tournée vers l'âme et une seconde face opposée destinée à venir en contact avec la pièce à fabriquer et formant une surface active de moulage, caractérisé en ce que le moule comprend une semelle en un deuxième matériau composite, ladite semelle étant une semelle préfabriquée collée à l'âme, en ce que l'âme interposée entre la semelle et la peau est une masse solide comprenant un ou plusieurs blocs de silicate de calcium assemblés entre eux, et en ce qu'au moins une partie de la surface active de moulage présente une forme homothétique de la forme d'au moins une partie de la surface de l'âme tournée vers la peau et recouverte par la peau. L'utilisation d'une semelle préfabriquée permet d'associer cette semelle à l'âme après revêtement de l'âme par la peau de sorte que l'association peut se faire dans des conditions optimales sans générer de déformation de la semelle. La conception du moule permet une réutilisation aisée d'au moins une partie du moule par découpage du moule au niveau de l'âme pour séparer la semelle et une partie de l'âme du moule. Cette partie séparée peut être réutilisée pour la fabrication d'un nouveau moule. L'utilisation de silicate de calcium sous forme de bloc au niveau de l'âme permet un usinage aisé de l'âme tout en apportant les performances souhaitées au moule.

Selon un mode de réalisation de l'invention, au moins la partie de la surface de l'âme tournée vers la peau qui, en surface, est conformée avec une forme homothétique de la surface active de moulage, est revêtue d'une couche étanche en un troisième matériau composite, disposée entre l'âme et la peau. La présence de cette couche étanche facilite les opérations ultérieures notamment dans le cas d'une imprégnation par infusion des matériaux composites venant à recouvrement de cette couche étanche.

Selon un mode de réalisation de l'invention, le moule comprend un dispositif de chauffage sous forme d'un réseau électrique interposé entre l'âme et la peau. La présence in situ d'un tel dispositif de chauffage permet un chauffage endogène homogène du moule sans risque de déformation de l'âme sous l'effet d'une élévation de la température du fait de la nature de l'âme. Il est ainsi possible d'atteindre des températures de chauffage élevées.

Selon un mode de réalisation de l'invention, la couche étanche en un troisième matériau composite est prise en sandwich entre l'âme et le dispositif de chauffage.

Selon un mode de réalisation de l'invention, le dispositif de chauffage est revêtu d'au moins une couche dite stabilisatrice en un quatrième matériau composite, cette couche stabilisatrice étant disposée entre la peau et le dispositif de chauffage. La présence d'une telle couche permet de fixer en position le dispositif de chauffage sur l'âme avant de procéder à la pose de la peau.

Selon un mode de réalisation de l'invention, les premier et deuxième matériaux composites et éventuellement les troisième et quatrième matériaux composites lorsqu'ils sont présents comprennent chacun un renfort se présentant de préférence sous forme d'une armature à base de fibres et une matrice polymère thermoplastique ou thermodurcissable.

Selon un mode de réalisation de l'invention, le ou les polymères des matrices des premier et deuxième matériaux composites sont en un matériau identique et les fibres des armatures des premier et deuxième matériaux composites sont en un matériau identique. Il en résulte une facilité de la liaison entre la peau et la semelle.

Selon un mode de réalisation de l'invention, les fibres sont choisies dans le groupe comprenant les fibres de carbone, de verre, polyamide, aramide, de bambous, de quartz et sont de préférence des fibres de carbone.

Selon un mode de réalisation de l'invention, le ou les polymères des matrices polymères sont choisis dans le groupe comprenant les polyuréthanes, les polyesters, les époxydes, les phénoliques, les phtalonitriles, les polyamides et les résines cyanate ester et les polyimides sont de préférence des polymères époxydes.

Selon un mode de réalisation de l'invention, la peau et la semelle sont reliées l'une à l'autre par des barrettes disposées sur le pourtour de la semelle. Ces barrettes de préférence réalisées avec un matériau composite, dont le ou les polymères de la matrice de même que les fibres de l'armature sont en un matériau identique à celui des premier et deuxième matériaux composites, permettent la réalisation d'une liaison mécanique entre la peau et la semelle.

L'invention a encore pour objet un procédé pour la fabrication d'un moule notamment pour la réalisation de pièce composite thermodurcissable ou thermoplastique, caractérisé en ce que le moule étant conforme à celui décrit ci-dessus, ledit procédé comprend une étape d'usinage de la partie de la surface de l'âme tournée vers la peau et destinée à être recouverte par la peau pour lui donner une forme, une étape de recouvrement au moins partiel de ladite partie usinée de l'âme par la peau, une étape d'usinage de la surface active de moulage de la peau formée par la face de la peau destinée à venir en contact avec la pièce à fabriquer pour conférer à ladite surface active de moulage une forme homothétique de la forme d'au moins une partie de la surface de l'âme tournée vers la peau et recouverte par la peau, une étape de fabrication de la semelle et une étape de collage de la semelle préfabriquée à l'âme préalablement recouverte au moins partiellement de la peau, de sorte que l'âme est interposée entre la semelle et la peau.

Selon un mode de mise en œuvre du procédé, le procédé comprend avant l'étape de recouvrement au moins partiel de ladite partie usinée de l'âme par la peau, une étape de recouvrement de l'âme au moins par une couche étanche en un troisième matériau composite, disposée entre l'âme et la peau.

Selon un mode de mise en œuvre du procédé, le procédé comprend avant l'étape de recouvrement au moins partiel de ladite partie usinée de l'âme par la peau, une étape de recouvrement de l'âme au moins par une couche étanche en un troisième matériau composite, disposée entre l'âme et la peau, cette étape étant suivie d'une étape de recouvrement de la couche étanche par un dispositif de chauffage et une étape de revêtement du dispositif de chauffage par au moins une couche dite stabilisatrice en un quatrième matériau composite, cette couche stabilisatrice étant disposée entre la peau et le dispositif de chauffage.

### Brève description des dessins

L'invention sera bien comprise à la lecture de la description suivante d'exemples de réalisation, en référence aux dessins annexés dans lesquels :

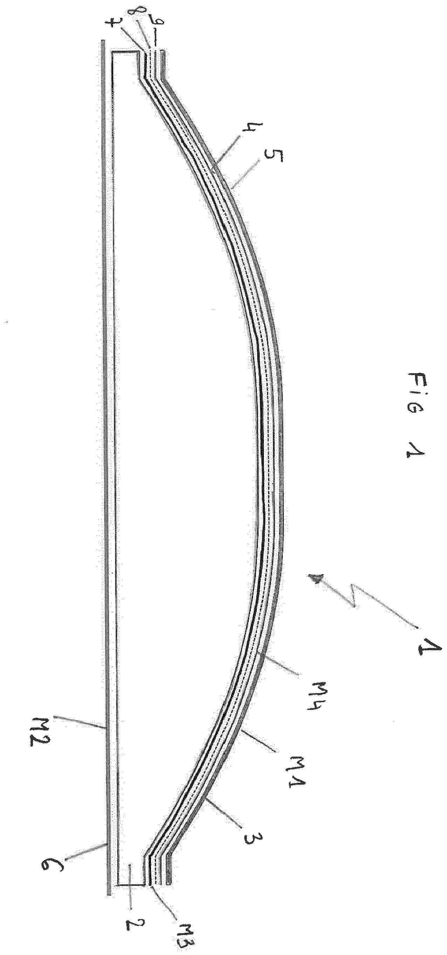

[Fig. 1] représente une vue schématique en coupe d'un moule conforme à l'invention équipé d'un dispositif de chauffage à l'état non assemblé de la semelle,
[Fig. 2] représente une vue schématique en coupe d'un moule conforme à l'invention équipé d'un dispositif de chauffage à l'état assemblé de la semelle,
[Fig. 3] représente une vue schématique en coupe d'un moule conforme à l'invention dépourvu de dispositif de chauffage à l'état non assemblé de la semelle.

Comme mentionné ci-dessus, le moule 1, objet de l'invention, permet la fabrication de pièce composite thermodurcissable ou thermoplastique, en particulier des pièces de grandes dimensions.

Le moule, tel que représenté, est ici destiné à la fabrication d'une pièce parabolique.

La fabrication d'une telle pièce à l'aide du moule s'opère traditionnellement par le dépôt d'une couche de matériau comprenant un liant au contact du moule suivi d'une étape de chauffage généralement réalisée sous pression de sorte que le liant de type résine polymérise au cours de la fabrication.

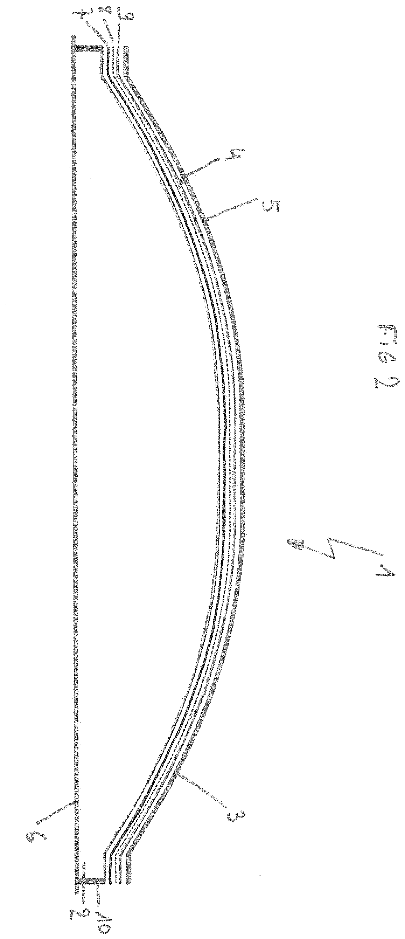

Ce moule 1, qui peut être du type de celui représenté à la figure 2, comprend au moins une âme 2 et une peau 3 en un premier matériau composite M1 disposée à recouvrement au moins partiel de l'âme 2. Cette peau 3 présente donc une première face 4 tournée vers l'âme 2 et une seconde face opposée destinée à venir en contact avec la pièce à fabriquer et formant une surface active de moulage 5.

Le moule 1 comprend encore une semelle 6 préfabriquée destinée à être collée à l'âme 2. Cette semelle 6 est réalisée en un deuxième matériau composite M2.

L'âme 2 est donc interposée entre la semelle 6 et la peau 3. De manière caractéristique à l'invention, l'âme 2 est une masse solide comprenant un ou plusieurs blocs de silicate de calcium assemblés entre eux. Les blocs de silicate de calcium peuvent être du type de ceux commercialisés par la Société PROSIREF.

Dans le cas d'une âme 2 formée de plusieurs blocs, les blocs peuvent être maintenus assemblés à l'aide d'un mortier ou d'une colle.

L'âme 2 peut avoir des dimensions variables. Dans l'exemple représenté, l'âme 2 présente une hauteur de 300 mm, une longueur de 3000 mm, et une largeur de 2900 mm.

La partie de la surface de l'âme 2 tournée vers la peau 3 et destinée à être recouverte par la peau 3 est usinée pour lui conférer une forme choisie en correspondance de la forme finale souhaitée pour la surface active de moulage 5 de la peau. Cette partie de la surface de l'âme 2 tournée vers la peau 3 qui, en surface, est conformée avec une forme homothétique de la surface active de moulage 5 est revêtue d'une couche étanche 7 en un troisième matériau composite M3 disposée entre l'âme 2 et la peau 3.

Dans les exemples représentés, la couche étanche 7 est formée, avant chauffage à une température généralement comprise entre 40 et 60°C, d'une fine couche de tissu de fibres de carbone imprégnée de résine durcissable tel qu'un liant époxy.

Une fois le chauffage opéré, la résine est durcie et la couche étanche 7 est achevée. Cette couche étanche 7 présente une épaisseur généralement comprise entre 0,1 et 2 mm.

Lorsque le moule 1 intègre un dispositif 8 de chauffage, ce dernier, qui se présente sous forme d'un réseau électrique, est positionné à recouvrement de la couche étanche 7 de sorte que la couche étanche 7 est prise en sandwich entre l'âme 2 et le dispositif 8 de chauffage.

Pour aider au maintien en position du dispositif 8 de chauffage, le moule 1 peut comprendre une couche stabilisatrice 9 en un quatrième matériau composite M4. Cette couche stabilisatrice 9 est disposée entre la peau 3 et le dispositif 8 de chauffage.

Dans les exemples représentés, cette couche stabilisatrice 9 est formée de plusieurs sous-couches (non représentées), chaque sous-couche comprenant une nappe de tissu de fibres de préférence de carbone et une matrice polymère avec un polymère de préférence de type époxyde.

La ou les nappes de tissu à base de fibres de carbone constituent une armature à base de fibres formant le renfort du quatrième matériau composite M4 tandis que le polymère de type époxyde forme la matrice polymère dudit quatrième matériau composite M4.

A ce stade, une étape de mise sous vide est opérée. Soit la nappe de tissu est imprégnée de résine et la mise sous vide a pour objectif d'aider au plaquage des couches sur le dispositif de chauffage, soit la nappe de tissu est non imprégnée de résine et la résine est injectée et/ou diffusée lors de la mise sous vide pour venir se répandre sous l'effet de la dépression et imprégner la ou les nappes de tissu.

Cette mise sous vide peut s'opérer à l'aide d'un sac à vide entourant le moule à ce stade de la fabrication. Cette étape de mise sous vide est suivie d'une étape de chauffage à une température généralement comprise 40 et 200°C pour une polymérisation de la matrice polymère.

Généralement, l'épaisseur finale de la couche stabilisatrice 9 est comprise entre 0,1 et 2 mm.

Enfin, la peau 3 est déposée à recouvrement de la couche stabilisatrice 9. Cette peau 3 peut, de manière similaire à la couche stabilisatrice 9, être formée de plusieurs sous-couches de tissu en fibres, par exemple de carbone, et d'une matrice polymère, telle qu'une matrice époxyde comme dans l'exemple représenté.

La dépose s'accompagne de manière similaire à ce qui a été décrit ci-dessus par une étape de mise sous vide et une étape de chauffage. La ou les nappes de tissu constitutives des sous-couches qui, à l'état superposé, forment la peau constituent l'armature à base de fibres formant le renfort du premier matériau composite M1, tandis que le polymère époxyde forme la matrice polymère dudit premier matériau composite M1.

Une fois la matrice polymère de la peau durcie, la peau 3 est soumise à un usinage de sa surface active de moulage 5 pour conférer à ladite surface active de moulage 5 une forme homothétique de la forme d'au moins une partie de la surface de l'âme 2 tournée vers la peau 3 et recouverte par la peau 3.

La peau 3 présente une épaisseur finale généralement comprise entre 4 mm et 12 mm.

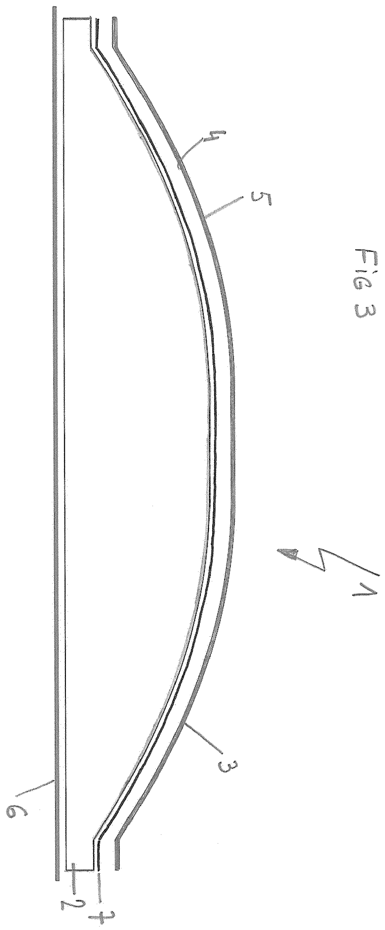

L'âme 2 ainsi revêtue de la peau 3 est prête à être associée à la semelle 6. Bien évidemment, dans le cas où le moule est dépourvu de dispositif 8 de chauffage, les étapes de pose du dispositif de chauffage 8 et de la couche stabilisatrice 9 sont supprimées et la peau vient revêtir directement la couche étanche 7 comme illustré à la figure 3.

La semelle 6 est réalisée en un deuxième matériau composite M2 qui comprend à nouveau un renfort sous forme d'une armature à base de fibres et une matrice polymère thermoplastique ou thermodurcissable.

Dans l'exemple représenté, l'armature est formée par au moins une, de préférence, un empilement de nappes de tissus en carbone, et le polymère de la matrice est une résine époxy.

La semelle présente une épaisseur finale comprise entre 4 mm et 12 mm. La semelle 6 est associée à l'âme 2 par collage.

A cet effet, la surface de l'âme 2 contre laquelle la semelle 6 est destinée à s'appliquer est poncée avant un pressage de la semelle 6 encollée contre l'âme 2.

Pour parfaire cette fixation et selon les conceptions, des barrettes 10 formées avec un matériau composite de même nature que la semelle et la peau sont disposées entre la peau et la semelle pour relier ces dernières entre elles comme illustré à la figure 2.

Il doit être noté que, bien que les fibres des premier, deuxième, troisième et quatrième matériaux composites M1, M2, M3 et M4 aient été décrites ci-dessus comme des fibres de carbone, ces fibres auraient pu de manière similaire être des fibres de verre, de polyamide, d'aramide, de bambou, de quartz ou autre, ou un mélange de ces dernières.

De manière similaire, bien que la matrice polymère des premier, deuxième, troisième et quatrième matériaux composites M1, M2, M3 et M4 ait été décrite ci-dessus comme comprenant un polymère époxyde, cette dernière pourrait comprendre un polymère ou un mélange de polymères choisis dans le groupe des polymères comprenant les polyuréthanes, les polyesters, les époxydes, les phénoliques, les phtalonitriles, les polyamides et les résines cyanates ester.

Idéalement, les premier et deuxième matériaux composites M1 et M2 comprennent des polymères en un matériau identique et des fibres en un matériau identique. Il en résulte une liaison mécanique entre la peau et la semelle qui est facilitée.

## Revendications

1. Moule (1) notamment pour la réalisation de pièce composite thermodurcissable ou thermoplastique, ledit moule (1) comprenant une âme (2) et une peau (3) en un premier matériau composite (M1), ladite peau (3), disposée à recouvrement au moins partiel de l'âme (2), présentant une première face (4) tournée vers l'âme (2) et une seconde face opposée destinée à venir en contact avec la pièce à fabriquer et formant une surface active de moulage (5), **caractérisé en ce que** le moule (1) comprend une semelle (6) en un deuxième matériau composite (M2), ladite semelle (6) étant une semelle préfabriquée collée à l'âme (2), **en ce que** l'âme (2) interposée entre la semelle (6) et la peau (3) est une masse solide comprenant un ou plusieurs blocs de silicate de calcium assemblés entre eux, et **en ce qu'**au moins une partie de la surface active de moulage (5) présente une forme homothétique de la forme d'au moins une partie de la surface de l'âme (2) tournée vers la peau (3) et recouverte par la peau (3).

2. Moule (1) selon la revendication 1, **caractérisé en ce qu'**au moins la partie de la surface de l'âme (2) tournée vers la peau (3) qui, en surface, est conformée avec une forme homothétique de la surface active de moulage (5), est revêtue d'une couche étanche (7) en un troisième matériau composite (M3), disposée entre l'âme (2) et la peau (3).

3. Moule (1) selon l'une des revendications 1 ou 2, **caractérisé en ce qu'**il comprend un dispositif (8) de chauffage sous forme d'un réseau électrique interposé entre l'âme (2) et la peau (3).

4. Moule (1) selon la revendication 3 prise en combinaison avec la revendication 2, **caractérisé en ce que** la couche étanche (7) en un troisième matériau composite (M3) est prise en sandwich entre l'âme (2) et le dispositif (8) de chauffage.

5. Moule (1) selon l'une des revendications 3 ou 4, **caractérisé en ce que** le dispositif (8) de chauffage est revêtu d'au moins une couche dite stabilisatrice (9) en un quatrième matériau composite (M4), cette couche stabilisatrice (9) étant disposée entre la peau (3) et le dispositif (8) de chauffage.

6. Moule (1) selon l'une des revendications 1 à 5, **caractérisé en ce que** les premier et deuxième matériaux composites (M1, M2) et éventuellement les troisième et quatrième matériaux composites (M3, M4) lorsqu'ils sont présents comprennent chacun un renfort se présentant de préférence sous forme d'une armature à base de fibres et une matrice polymère thermoplastique ou thermodurcissable.

7. Moule (1) selon la revendication 6, **caractérisé en ce que** le ou les polymères des matrices des premier et deuxième matériaux composites (M1, M2) sont en un matériau identique et **en ce que** les fibres des armatures des premier et deuxième matériaux composites (M1, M2) sont en un matériau identique.

8. Moule (1) selon l'une des revendications 6 ou 7, **caractérisé en ce que** les fibres sont choisies dans le groupe comprenant les fibres de carbone, de verre, polyamide, aramide, de bambous, de quartz, et sont de préférence des fibres de carbone.

9. Moule (1) selon l'une des revendications 6 à 8, **caractérisé en ce que** le ou les polymères des matrices polymères sont choisis dans le groupe comprenant les polyuréthanes, les polyesters, les époxydes, les phénoliques, les phtalonitriles, les polyamides et les résines cyanate ester et les polyimides sont de préférence des polymères époxydes.

10. Moule (1) selon l'une des revendications 1 à 9, **caractérisé en ce que** la peau (3) et la semelle (6) sont reliées l'une à l'autre par des barrettes (10) disposées sur le pourtour de la semelle (6).

11. Procédé pour la fabrication d'un moule (1) notamment pour la réalisation de pièce composite thermodurcissable ou thermoplastique, **caractérisé en ce que** le moule (1) étant conforme à l'une des revendications 1 à 10, ledit procédé comprend une étape d'usinage de la partie de la surface de l'âme (2) tournée vers la peau (3) et destinée à être recouverte par la peau (3) pour lui donner une forme, une étape de recouvrement au moins partiel de ladite partie usinée de l'âme (2) par la peau (3), une étape d'usinage de la surface active de moulage (5) de la peau (3) formée par la face de la peau (3) destinée à venir en contact avec la pièce à fabriquer pour conférer à ladite surface active de moulage (5) une forme homothétique de la forme d'au moins une partie de la surface de l'âme (2) tournée vers la peau (3) et recouverte par la peau (3), une étape de fabrication de la semelle (6) et une étape de collage de la semelle (6) préfabriquée à l'âme (2) préalablement recouverte au moins partiellement de la peau (3), de sorte que l'âme (2) est interposée entre la semelle (6) et la peau (3).
